# EUROPÄISCHE PATENTANMELDUNG

(11) **EP 3 260 338 A1**
(43) Veröffentlichungstag der Anmeldung: **27.12.2017**
(21) Anmeldenummer: 16175894.1
(22) Anmeldetag: 23.06.2016
(51) Int. Cl.: B60T 13/26

(54) **PNEUMATISCHES SYSTEM FÜR KRAFTFAHRZEUGE**

(71) Anmelder: Kochsiek, Adolf, 33818 Leopoldshöhe (DE)
(72) Erfinder: Kochsiek, Adolf, 33818 Leopoldshöhe (DE)
(74) Vertreter: Rausch Wanischeck-Bergmann Brinkmann

(57) **Zusammenfassung**

Um ein pneumatisches System für Kraftfahrzeuge bereitzustellen, welches leicht und umweltfreundlich ist und darüber hinaus flexibel in Bezug auf Weiterentwicklungen und Anpassungen an moderne Fahrzeugsysteme wird mit der Erfindung ein Pneumatisches System für Kraftfahrzeuge vorgeschlagen, umfassend wenigstens einen Druckluftspeicher, einen Kompressor, eine durch eine Regeleinheit regelbare Ventileinheit und ein Leitungssystem, um mittels des Kompressors erzeugte und im Druckluftspeicher gespeicherte Druckluft einem betätigbaren Stellglied zuzuführen.

## Beschreibung

Die vorliegende Erfindung betrifft ein pneumatisches System für Kraftfahrzeuge.

Im Kraftfahrzeugbereich gibt es nur wenige pneumatische Anwendungen. Es ist bekannt, Stoßdämpfer oder sonstige Fahrwerksdämpfungen pneumatisch auszulegen. Im Übrigen sind krafterzeugende Systeme, beispielsweise Bremssysteme, hydraulisch ausgelegt, andere rein elektrisch, wie beispielsweise Fensterheber, Lichtverstellungen, Servolenkungen und dergleichen.

Die bisher verwendeten Systeme sind weitgehend ausgereift und nur geringfügig veränderbar. Insbesondere sind sie nur schwer auf neue Fahrzeugentwicklungen anpassbar. Neue Fahrzeugentwicklungen wie beispielsweise Hybridfahrzeuge oder Elektrofahrzeuge werden unter ökonomischen Gesichtspunkten gebaut. Dabei ist insbesondere Gewichtsersparnis ein vorrangiges Thema. Bei den bekannten Systemen ist jedoch kaum mehr eine Möglichkeit zur weiteren Gewichtseinsparung möglich. Darüber hinaus sind die Systeme Verbraucher insbesondere elektrischer Energie, im Falle von Bremssystemen von mechanischer Energie, die über eine Hydraulikpumpe in einen Hydraulikdruck gewandelt wird. Hierzu ist eine zusätzliche Flüssigkeit erforderlich, so dass diese Systeme aufwendig sind. Entsprechende Kraftverstärker und dergleichen müssen umfasst sein. Insbesondere bei Elektrofahrzeugen ist das Mehrgewicht der Batterie zu kompensieren.

Ausgehend vom vorbeschriebenen Stand der Technik liegt der Erfindung die Aufgabe zugrunde, ein pneumatisches System für Kraftfahrzeuge bereitzustellen, welches leicht und umweltfreundlich ist und darüber hinaus flexibel in Bezug auf Weiterentwicklungen und Anpassungen an moderne Fahrzeugsysteme.

Zur technischen Lösung dieser Aufgabe wird ein pneumatisches System mit den Merkmalen des Patentanspruches 1 vorgeschlagen. Weitere Vorteile und Merkmale ergeben sich aus den Unteransprüchen.

Erfindungsgemäß umfasst das pneumatische System für Kraftfahrzeuge neben einem Druckluftspeicher zugleich einen Kompressor, der während des Betriebs des Kraftfahrzeuges den Druckluftspeicher füllt. Entsprechende Leitungssysteme und regelbare Ventileinheiten ermöglichen es, Druckluft entsprechenden Stellgliedern zuzuführen. So lassen sich die unterschiedlichsten Systeme in einem Kraftfahrzeug pneumatisch betätigen.

Die pneumatischen Module sind üblicherweise leichter als eine Vielzahl elektrischer oder gar hydraulischer Systeme. Es wird die Verwendung umweltschädlicher Stoffe vermieden und in der Regel Energie eingespart.

Dadurch, dass die Druckluft wirtschaftlich während des Betriebs des Fahrzeuges hergestellt wird, entstehen keine zusätzlichen Energiekosten. Im Kraftfahrzeug sind sehr viele Funktionen elektrisch realisiert. Viele elektrische Systeme lassen sich auf pneumatische Funktion umstellen, beispielsweise Fensterheber, Sitzverstellungen, Lordosenstütze, Sitzhärteverstellungen, Scheibenwischer, Verriegelungen, Kupplungen, Differenziale und sogar Getriebebetätigungen, Scheinwerferverstellungen, Kurvenlicht, Fahrgastzellenbelüftung, Kofferraumbetätigung und so weiter.

Darüber hinaus lassen sich auch funktionale Systeme auf Druckluft umstellen, insbesondere Bremssysteme.

In vorteilhafter Weise kann das System mit Drücken von kleiner 25 bar arbeiten, stellt somit keine Risikoquelle dar.

Mit besonderem Vorteil wird vorgeschlagen, dass eine Vielzahl von Druckluftspeichern vorgesehen sind. Dies ermöglicht es, Systeme redundant mit Druckluftspeichern zu speisen, um Systemausfälle zu vermeiden oder zu überbrücken. Vorzugsweise sind die Druckluftspeicher im Frontbereich des Fahrzeugs angeordnet, können also bei Unfällen zusätzliche Sicherheit bieten. Zu diesem Zweck ist mit besonderem Vorteil vorgeschlagen, dass die Druckluftspeicher balkenförmig unter der Windschutzscheibe angeordnet sind. Dabei kann jeder Druckluftspeicher balkenförmig sein und eine Vielzahl solcher Speicher parallel angeordnet sein oder es wird durch nebeneinanderliegende Speicher ein balkenförmiger Speicher ausgebildet.

Weiterhin wird mit Vorteil vorgeschlagen, dass wenigstens ein Betätigungsglied zur Auslösung durch eine Bedienperson vorgesehen ist. Dies kann beispielsweise ein Pedal, ein Schalter, ein Steuerorgan oder dergleichen sein.

Zur Erzeugung des Druckes sind auch Beispiele bekannt, welche auf dem Vorschlag basieren, einen Windgenerator zur Erzeugung elektrischer Energie an einem PKW in einem luftumströmten Bereich unterzubringen.

Es wird ein System vorgeschlagen, bei welchem eine Windturbine, ein Kompressor und ein Druckluftspeicher zusammenwirken. Die Windturbine wird durch die Relativbewegung des Fahrzeugs durch die Umgebungsluft angetrieben. Ihrerseits treibt sie einen Kompressor an, der seinerseits den Druckluftspeicher füllt.

Unter Kompressor im Sinne der vorliegenden Erfindung ist eine Art von Luftverdichter zu verstehen, so kann die Turbine auch eine einfache Verdichterstufe aufweisen.

In vorteilhafter Weise kann die Windturbine ein Staudruck beaufschlagter Radialläufer sein. Die Erfindung geht davon aus, dass bei bewegten Fahrzeugen ein Staudruck ohnehin entsteht. Diese stellt somit eine kostengünstige Energiequelle dar.

Mit der Erfindung werden sämtliche bisher als elektrische Systeme ausgeführten Systeme entlastbar. Man kann die unterschiedlichsten Systeme pneumatisch ausführen, das heißt Federsysteme, Hebersysteme und dergleichen.

Gemäß einem weiteren vorteilhaften Vorschlag der Erfindung kann die Windturbine alternativ auch mechanisch angetrieben werden. Auf diese Weise ist es möglich, selbst im Stand den Druckluftspeicher zu laden. Hierzu kann beispielsweise ein Elektromotor, ein Verbrennungsmotor oder dergleichen eingesetzt sein.

Als Druckluftspeicher kommt gemäß einem weiteren vorteilhaften Vorschlag der Erfindung eine mehrstufige Speichereinheit in Betracht. So können parallel mehrere Druckluftspeicher geladen werden, um als redundante Druckluftquelle bereitzustehen. Diese Druckluftspeicher können beispielsweise im Frontbereich einer Fahrgastzelle angeordnet sein und auf diese Weise noch einen Sicherheitspuffer bereitstellen.

Durch die Erfindung steht Druckluft als alternative Energiequelle zur Verfügung. Diese kann bedarfsweise wieder durch Entladung der Druckluftspeicher für beliebige Zwecke verwendet werden. Anwendungsbeispiele sind die Erzeugung elektrischer Energie sowie der Ersatz hydraulischer oder elektrischer Systeme durch nunmehr pneumatische Systeme.

Mit weiterem Vorteil wird vorgeschlagen, dass der Kompressor einen Kolben mit regelbarem Hub aufweist. Diese Technologie ermöglicht es, selbst bei geringfügigen Bewegungen der Windturbine eine Hubbewegung durchzuführen. Auf diese Weise wird in allen Fahrzuständen Druckluft erzeugt, je nach Vortriebsgeschwindigkeit eine entsprechende Menge.

Ein beispielhafter Anwendungsbereich für Pneumatik im Fahrzeug sind Bremssysteme.

Bremssysteme sind umfangreich bekannt und im Einsatz. Im Bereich von Pkw's haben sich hydraulische Bremssysteme durchgesetzt. Hierbei wird eine Bremsflüssigkeit unter Druck aus einem Speicher zu den Bremsbacken geführt und bewirkt eine Bewegung der Bremsbacken in Richtung einer Bremsscheibe. Diese Systeme haben eine Reihe von Nachteilen. Ein wesentlicher Nachteil ist die Notwendigkeit der Erzeugung, Lagerung und des Einsatzes eines separaten Mediums, der Bremsflüssigkeit. Diese hat hygroskopische Eigenschaften und muss daher regelmäßig ausgetauscht werden. Speicher, Hauptbremszylinder, Leitungen und Ventile stellen schwere Systeme dar. Insgesamt ist ein hydraulisches Bremssystem schwer.

Im Bereich von Lkw's sind durchaus pneumatische Bremssysteme bekannt, wobei allerdings lediglich ein kraftbetätigter Kolben Druck auf ein geladenes System ausübt. Es ist nicht in dem Sinne ein pneumatisches System, als es nicht damit vergleichbar ist, sondern eher eine pneumatische Verstärkung darstellt.

Hydraulische Bremssysteme sind im Wesentlichen ausgereift. Sie sind wenig veränderbar und insbesondere in Bezug auf neue Fahrzeugentwicklungen wenig anpassbar. Neue Fahrzeugentwicklungen wie beispielsweise Hybridfahrzeuge oder Elektrofahrzeuge benötigen andere Bremszeiten und andere Bremsmomente. Elektromotoren werden praktisch ein- und ausgeschaltet, d.h., auf Räder wirkende Momente sind spontan und müssen entsprechend reaktiv sein. Darüber hinaus besteht ein grundsätzliches Bedürfnis, wo immer möglich in Fahrzeugen Gewicht einzusparen, um den Verbrauch in Bezug auf eine angemessene Leistung zu optimieren.

Zur technischen Verbesserung wird ein Bremssystem für Fahrzeuge vorgeschlagen, welche eine Bremseinheit bestehend aus einer Bremsscheibe und einer Bremskolbeneinheit aufweisen, wobei ein Druckluftspeicher, der mit Druckluft befüllt ist, durch eine Steuereinheit so entladen wird, das bedarfsgerecht Druckluft zur Beaufschlagung der Bremskolbeneinheit zugeführt wird.

Die bedarfsgerechte Zuführung ist abhängig von einem Signalgeber, der in herkömmlicher Weise ein Pedal oder auch ein beliebiger Schalter sein kann. Die Bremsdruckbedarfsangabe kann rein digital und elektronisch sein und muss nicht mehr mit Körperkraft ausgeübt werden. Dadurch eignet sich das System insbesondere auch für Behinderte oder ganz alternative Betätigungsvorgänge.

Das erfindungsgemäße System zeichnet sich durch besondere Leckagedichtigkeit der einzelnen Aggregate und eine gute Steuerbarkeit aus. Darüber hinaus ist es nicht leckageanfällig und führt insbesondere bei Undichtigkeiten nicht zu Umweltschäden.

Das pneumatische System ist billiger und insbesondere für neue, elektrische Fahrsysteme besser geeignet.

Selbstverständlich umfasst das erfindungsgemäße Bremssystem eine im Bereich beispielsweise einer Bremsscheibe angeordnete Bremskolbeneinheit, die über ein Ventil, welches von einer Steuereinheit angesteuert wird, unter Verwendung entsprechender Leitungen mit Druckluft beaufschlagt werden kann. Die Druckluft kommt von einem oder mehreren Speichern, die ebenfalls mittels Leitungen mit dem entsprechenden Ventil bzw. der Steuereinheit verbunden sind. Eine Betätigungseinheit kann direkt auf die Ventile oder indirekt und auch beispielsweise digital über die Steuereinheit einen Bremsvorgang einleiten. Dies kann in herkömmlicher Weise ein Pedal sein bis hin zu einer Joystickartigen Bremssteuerung. Jegliche Art der Betätigungseinheit ist denkbar.

Ein großer Vorteil des Systems ergibt sich auch hier, wenn mit geringen Drücken kleiner 25bar gearbeitet wird. Für entsprechend großflächige Kolben, die gemäß einem vorteilhaften Vorschlag der Erfindung unrund gefertigt sind, also beispielsweise elliptischen Querschnitt haben können, sind diese Drücke ausreichend. Bei entsprechenden unrunden Konturen können große Kolbenflächen eingesetzt werden, um auf diese Weise entsprechend gute Bremsergebnisse zu erzielen.

Speicher werden mehrfach redundant vorgesehen. Wenigstens ein Speicher wird als Notspeicher erfindungsgemäß vorgesehen, gemäß einem weiteren vorteilhaften Vorschlag wird für jedes Rad ein Notspeicher vorgesehen. Somit ist eine erhöhte Sicherheit gegeben, was die Einsetzbarkeit des Systems anbetrifft.

Die Sicherheit wird weiter erhöht durch die Verwendung von Mehrkreissystemen. Gemäß einem besonders vorteilhaften Vorschlag der Erfindung kann ein Vierkreissystem eingesetzt werden. Es ist auch denkbar, dieses beispielsweise im Sinne einer Kreuzschaltung einzusetzen, um bei Ausfall eines Kreises für ein Rad diesen mit dem Kreis für ein anderes Rad zu koppeln.

Das erfindungsgemäße System bringt eine große Reihe von Vorteilen mit sich. Bei Leckage ist es zunächst einmal unschädlich für die Umwelt. Darüber hinaus kann, da lediglich Druckluft nachgeliefert werden muss, praktisch immer nachgefüllt werden. Zumindest lässt sich ein Minimum an Funktionalität aufrecht erhalten. Es wird Bremsflüssigkeit vollends eingespart, insbesondere auch deren häufiger Wechsel, was angesichts der großen Anzahl von Fahrzeugen eine sehr große Menge ausmacht. Darüber hinaus lässt sich sehr viel Gewicht einsparen, da Bremskraftverstärkter und dergleichen Zusatzaggregate ebenfalls vollständig entfallen. Bei Verwendung großer Bremskolben, die mittels neuer Technologien wie Unrunddrehtechnik herstellbar sind, kann mit Drücken gearbeitet werden, die gering sind. Da Luft grundsätzlich kompressibel ist, was Hydraulik dem Grunde nach nicht ist, kann unter Verwendung großer Kolben auch dieser Faktor berücksichtigt werden. Mit dem erfindungsgemäßen System werden die Bremskolben immer direkt angesprochen, nicht indirekt über irgendwelche Zwischenaggregate. Der Kolben wirkt direkt auf die Bremsbacke und damit als Bremse. Darüber hinaus ist das pneumatische System im Vergleich zu herkömmlichen Systemen äußerst schnell.

Das erfindungsgemäße pneumatische System ermöglicht es, beim Fahrzeugbau erhebliche Gewichtsreduzierungen zu erzielen. Es wird der Einsatz umweltschädlicher Stoffe vermieden und Energie eingespart.

Weitere Vorteile und Merkmale der Erfindung ergeben sich aus der folgenden Beschreibung anhand der Figuren. Dabei zeigen:

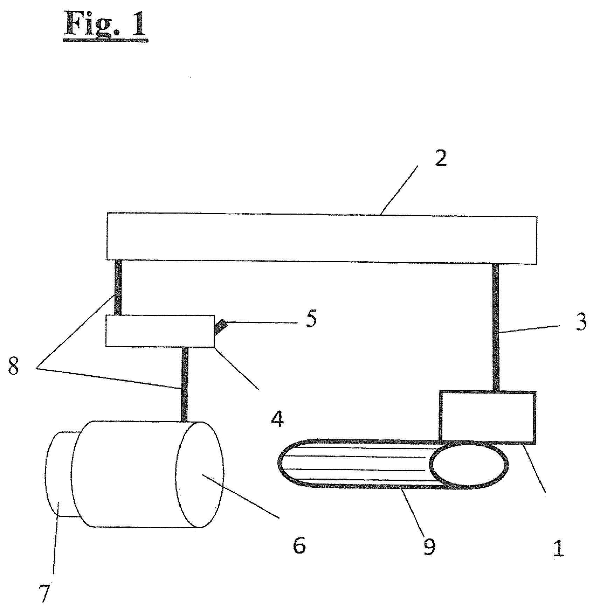

- Fig. 1: eine schematische Darstellung eines Ausführungsbeispiels für ein erfindungsgemäßes Bremssystem.

Rein schematisch ist ein Kompressor oder eine Druckluftquelle 1 gezeigt, die einen Druckluftspeicher 2 füllt. Zu diesem Zweck ist die Druckluftquelle 1 mit dem Speicher mittels entsprechender Leitungen 3 verbunden. Eine Steuereinheit 4, die im gezeigten Ausführungsbeispiel mittels eines direkt verbundenen Betätigungsgliedes 5 betätigbar ist, kann Druckluft über die Leitungen 8 vom Speicher 2 zu einem Zylinder 6 führen, in dem ein Kolben 7 geführt ist. Hierbei kann es sich um den Bremskolben handeln, der direkt eine Bremsbacke betätigt. Diese wirkt dann auf eine nicht gezeigte Scheibe eines Fahrzeuges.

Im gezeigten Ausführungsbeispiel ist auch ein Generator 9 gezeigt, der als Radialläufer stilisiert ist. Der Radialläufer kann beispielsweise im Staudruckbereich eines Fahrzeugs angeordnet werden und die als Kompressor ausgelegte Druckluftquelle 1 betreiben.

Das beschriebene Ausführungsbeispiel dient nur der Erläuterung und ist nicht beschränkend.

### Bezugszeichenliste

- 1: Druckluftquelle
- 2: Druckluftspeicher
- 3: Leitung
- 4: Steuerung
- 5: Betätigungsglied
- 6: Zylinder
- 7: Kolben
- 8: Leitung
- 9: Generator

## Patentansprüche

1. Pneumatisches System für Kraftfahrzeuge, umfassend wenigstens einen Druckluftspeicher, einen Kompressor, eine durch eine Regeleinheit regelbare Ventifeinheit und ein Leitungssystem, um mittels des Kompressors erzeugte und im Druckluftspeicher gespeicherte Druckluft einem betätigbaren Stellglied zuzuführen.

2. Pneumatisches System nach Anspruch 1, **dadurch gekennzeichnet, dass** dieses mehrere Druckluftspeicher umfasst.

3. Pneumatisches System nach einem der vorhergehenden Ansprüche, **dadurch gekennzeichnet, dass** ein Druckluftspeicher im Frontbereich des Fahrzeugs angeordnet ist.

4. Pneumatisches System nach Anspruch 3, **dadurch gekennzeichnet, dass** wenigstens ein Druckluftspeicher balkenförmig unter der Windschutzscheibe eines Fahrzeugs angeordnet ist.

5. Pneumatisches System nach einem der vorhergehenden Ansprüche, **dadurch gekennzeichnet, dass** dieses ein Betätigungsglied zur Auslösung durch eine Bedienperson aufweist.

6. Pneumatisches System nach einem der vorhergehenden Ansprüche, **dadurch gekennzeichnet, dass** dieses bei einem Druck von weniger als 25 bar arbeitet.

7. Pneumatisches System nach einem der vorhergehenden Ansprüche, **dadurch gekennzeichnet, dass** dieses eine Windturbine umfasst.

8. Pneumatisches System nach Anspruch 7, **dadurch gekennzeichnet, dass** die Windturbine durch den Fahrtwind des Fahrzeugs angetrieben wird.

9. Pneumatisches System nach einem der Ansprüche 7 oder 8, **dadurch gekennzeichnet, dass** die Windturbine im Staudruckbereich des Fahrzeugs angeordnet ist.

10. Pneumatisches System nach einem der vorhergehenden Ansprüche, **dadurch gekennzeichnet, dass** der Kompressor einen Kolben mit regelbarem Hub umfasst.

11. Pneumatisches System nach einem der vorhergehenden Ansprüche, **dadurch gekennzeichnet, dass** mindestens ein Druckluftspeicher in die Karosserie des Fahrzeugs integriert ist.
